# EUROPEAN PATENT SPECIFICATION

(11) **EP 2 439 882 B1**
(45) Date of publication and mention of the grant of the patent: **17.02.2016**
(21) Application number: 10818379.9
(22) Date of filing: 07.09.2010
(51) Int. Cl.: H04L 12/24

(54) **METHOD, DEVICE AND SYSTEM FOR EVALUATING NETWORK RELIABILITY**
VERFAHREN, VORRICHTUNG UND SYSTEM ZUR BEWERTUNG DER ZUVERLÄSSIGKEIT VON NETZWERKEN
PROCÉDÉ, DISPOSITIF ET SYSTÈME D'ÉVALUATION DE LA FIABILITÉ D'UN RÉSEAU

(30) Priority: 27.09.2009 CN 200910178436
(43) Date of publication of application: 11.04.2012
(73) Proprietor: Huawei Technologies Co., Ltd., Longgang District Shenzhen, Guangdong 518129 (CN)
(72) Inventor: ZHANG, Shuping, Shenzhen Guangdong 518129 (CN); SHEN, Linfei, Shenzhen Guangdong 518129 (CN); WANG, Yi, Shenzhen Guangdong 518129 (CN); YE, Zhihua, Shenzhen Guangdong 518129 (CN)
(74) Representative: Isarpatent
(86) International application number: PCT/CN2010/076668
(87) International publication number: WO 2011/035685

(56) References cited:
- CN-A- 1 474 542
- US-A- 5 428 619
- US-A1- 2006 041 417
- US-A1- 2008 133 979
- US-A1- 2009 185 496
- US-B1- 6 857 014
- US-B1- 6 857 014
- MARCO BOZZANO ET AL: "The FSAP/NuSMV-SA Safety Analysis Platform", INTERNATIONAL JOURNAL ON SOFTWARE TOOLS FOR TECHNOLOGY TRANSFER, SPRINGER, BERLIN, DE, vol. 9, no. 1, 29 June 2006 (2006-06-29), pages 5-24, XP019475175, ISSN: 1433-2787
- CAUFFRIEZ L ET AL: "Design of intelligent distributed control systems: a dependability point of view", RELIABILITY ENGINEERING AND SYSTEM SAFETY, ELSEVIER APPLIED SCIENCE, GB, vol. 84, no. 1, 1 April 2004 (2004-04-01), pages 19-32, XP027111730, ISSN: 0951-8320 [retrieved on 2004-04-01]

## Description

### FIELD OF THE INVENTION

The present invention relates to the field of communications technologies, and in particular, to a method, a device and a system for evaluating network reliability.

### BACKGROUND OF THE INVENTION

In order to guarantee network reliability, a series of questions are required to be answered: such as how is the whole reliability status of a current network? Which nodes in the network may cause a network failure? How does it occur? How serious is the failure? How long will it last? And how often will it happen? Only by clearly answering these questions can an actually feasible solution be put forward to deal with these questions, thereby enhancing the network reliability. An analysis of the network reliability is required in order to answer these questions.

The existing reliability analyzing technologies mainly include a failure mode effect analysis (FMEA, Failure Mode Effect Analysis) and a fault tree analysis (FTA, Fault Tree Analysis). Comparatively speaking, currently the FTA method is more widely used in overall network reliability analysis than the FMEA method.

The FTA method is a graphics deduction method. Steps for a system to perform reliability analysis by using the FTA method are in the following.

First, it is required to collect system information and failure information, analyze the system information and failure information, determine a top event according to an analysis situation, and establish a fault tree according to the analysis situation. In the process of establishing the fault tree, decomposing a bottom event and an intermediate event, and simplifying the fault tree and performing a qualitative and quantitative analysis according to an analysis situation are involved. The top event is an event that the system does not expect to happen, that is, an event to be studied. The bottom event is located at the bottom of the tree, and is generally a basic event (a symbol of which is in a ring shape; the basic event is an event that the cause of the event has or has not been clarified); the bottom event may be regarded as a "leaf". The intermediate event is also called a fault event, which is located between the top event and the bottom event, indicated with a rectangle symbol closely followed by a logic gate, and may be vividly regarded as a "branch".

Document D1 (US 2009/0185496 A1) discloses that network performability characteristics with improved accuracy are derived by taking into account, in the various analyzed network failure states, attributes of elements at the logical level other than just the capacities of edges, as well as by taking into account one or more "abstract components," such as scheduled maintenance, and by using multiple traffic matrices.

Document D2 (US 2006/0041417 A1) discloses that a utility for enhancing the interface of a electronic circuit simulator provides for selecting signals for monitoring, selecting groups of components for variation of tolerances and inserting faults to an underlying model of the circuit.

Document D3 (Bozzano, M. et al.: "The FSAP/NuSMV-SA Safety Analysis Platform" Int. J. on Software Tools for Tech. Transf., 2006, vol. 9(1) p. 5-24) discloses that a platform which aims to improve the development cycle of complex systems by providing a uniform environment that can be used both at design time and for safety assessment. The platform makes the modeling and safety assessment of complex systems easier by providing a facility for automatically augmenting a system model with failure modes, whose definitions are retrieved from a predefined library.

In the study and implementation process of the prior art, it is found that a fault tree of a system established by the system with the FTA method is not a model that includes all possible system failures or causes of system failures, that the fault tree may only indicate two statuses, namely, success and failure, and may only describe the system at a certain moment, and that an error may easily occur during the establishing process and the established fault tree does not certainly have actual analyzing meaning, that is, the fault tree may not analyze the network reliability in an overall and effective way.

### SUMMARY OF THE INVENTION

Embodiments of the present invention provide a method, a device and a system for evaluating network reliability, so as to analyze the network reliability in an overall and effective way.

A method for evaluating network reliability includes:
acquiring network topology information:
   determining, according to the acquired network topology information, one or more nodes and a connection that are needed to be analyzed; and
   determining, according to a network hierarchy comprised in a service or a function of the node that is needed to be analyzed, a network failure analysis hierarchy of the node as an analysis object or a list of analysis objects;
   acquiring a network failure mode of the analysis object; and
   hierarchically analyzing, according to the network failure mode, reliability of the analysis object to obtain a reliability evaluation result.

A device for evaluating network reliability includes:
a topology analyzing unit, configured to acquire network topology information;
an object determination subunit, configured to determine, according to the network topology information acquired by the topology analyzing unit, one or more nodes and a connection that are needed to be analyzed; and
an analysis hierarchy determination subunit, configured to determine, according to a network hierarchy comprised in a service or a function of the nodes that is needed to be analyzed, a network failure analysis hierarchy of the node that is needed to be analyzed as an analysis object or a list of analysis objects, wherein the node is determined by the object determination subunit;
a failure mode acquiring unit, configured to acquire a network failure mode of the analysis object which is determined by the object determination unit; and
a reliability analyzing unit, configured to hierarchically analyze, according to the network failure mode acquired by the failure mode acquiring unit, reliability of the analysis object to obtain a reliability evaluation result.

A system for evaluating network reliability includes any one of devices for evaluating reliability provided in the embodiments of the present invention.

The embodiments of the present invention adopt:
acquiring network topology information;
determining, according to the acquired network topology information, an analysis object;
acquiring a network failure mode of the analysis object; and
hierarchically analyzing, according to the network failure mode, reliability of the analysis object to obtain a reliability evaluation result.

The embodiments of the present invention determine, according to acquired network topology information, an analysis object, acquire network failure modes of the analysis object, and analyze and evaluate reliability of the analysis object in a hierarchical and overall way with respect to the failure modes. The solution may effectively instruct activities such as network reliability design, verification and evaluation. As the concept of a hierarchical analysis is introduced into the analysis, analysis properties of analysis objects (for example, a node and a connection) are divided according to hierarchies, so that the network is effectively decomposed, the overall decomposing analysis is ensured, and the difficulty of the analysis is reduced.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skills in the art can obtain other drawings according to the accompanying drawings without creative efforts.
FIG. 1 is a flowchart of a method provided in Embodiment 1 of the present invention;
FIG 2 is a flowchart of a method provided in Embodiment 2 of the present invention;
FIG. 3 is a schematic diagram of a method for determining a node/connection, which is to be analyzed, provided in an embodiment of the present invention;
FIG. 4 is a schematic diagram of another method for determining a node/connection, which is to be analyzed, provided in an embodiment of the present invention;
FIG. 5 is a schematic diagram of still another method for determining a node/connection , which is to be analyzed, provided in an embodiment of the present invention;
FIG 6 is a schematic diagram of a method for determining an analysis hierarchy of a node provided in an embodiment of the present invention;
FIG 7 is a schematic diagram of another method for determining an analysis hierarchy of a node provided in an embodiment of the present invention;
FIG 8 is a schematic structural diagram of a device for evaluating network reliability provided in an embodiment of the present invention;
FIG 9 is a schematic structural diagram of an object determination unit provided in an embodiment of the present invention;
FIG 10 is another schematic structural diagram of the object determination unit provided in an embodiment of the present invention;
FIG 11 is still another schematic structural diagram of the object determination unit provided in an embodiment of the present invention;
FIG. 12 is a schematic structural diagram of a reliability analyzing unit provided in an embodiment of the present invention; and
FIG 13 is a schematic structural diagram of a system for evaluating network reliability provided in an embodiment of the present invention.

### DETAILED DESCRIPTION OF THE EMBODIMENTS

The technical solutions of the present invention will be clearly and comprehensively described in the following with reference to the accompanying drawings. It is obvious that the embodiments to be described are only a part rather than all of the embodiments of the present invention. All other embodiments obtained by persons of ordinary skills in the art based on the embodiments of the present invention without creative efforts shall fall within the protection scope of the present invention.

The embodiments of the present invention provide a method, a device and a communication system for evaluating network reliability, which are respectively described in detail in the following.

### Embodiment 1

This embodiment is described from the respective of a device for evaluating network reliability. It should be noted that an applicable analysis object of the solution provided in the embodiment of the present invention is a communication network based on the Internet Protocol (IP, Internet Protocol).

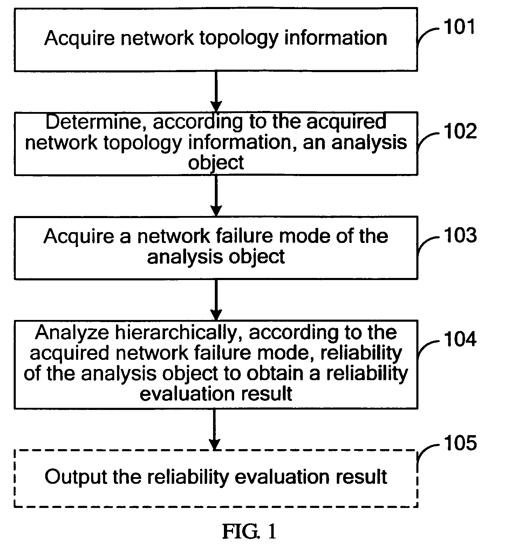

A method for evaluating network reliability includes: acquiring network topology information; determining, according to the acquired network topology information, an analysis object; acquiring a network failure mode of the analysis object; and hierarchically analyzing, according to the network failure mode, reliability of the analysis object to obtain a reliability evaluation result, and outputting the reliability evaluation result. As shown in FIG 1, a specific process may be described in the following.

Step 101: Acquire network topology information.

The topology information may include: a network element (or referred to as a node), a product name or product number corresponding to the network element, a connection relation, a connection name, and a connection type. The network topology information may be acquired in the following manner:
acquiring an existing networking diagram; or, receiving a networking diagram input by a user in a way of drawing.

Definitely, other acquiring manners may also be adopted, which are not cited here.

Step 102: Determine, according to the acquired network topology information, an analysis object.

Specifically, a node and a connection that are needed to be analyzed may be determined according to the acquired network topology information, and a network failure analysis hierarchy of the node that is needed to be analyzed is determined. Specifically, the network failure analysis hierarchy of the node that is needed to be analyzed needs to be determined according to a network hierarchy included in a service or a function of the node that is needed to be analyzed.

Various manners may be adopted to determine, according to the acquired network topology information, the node and the connection that are needed to be analyzed, for example:
(1) generating, according to the acquired network topology information, a list of analysis objects (Analysis Objects), where the list of analysis objects includes all nodes and connections in a network; and setting all the nodes and connections as the nodes and connections that are needed to be analyzed;
(2) listing, according to the acquired network topology information, all nodes and connections in a network; acquiring a node and a connection that are needed to be analyzed, where the node and the connection are selected by a user from the listed nodes and connections; and generating, according to the acquired node and connection that are needed to be analyzed, a list of analysis objects; and
(3) acquiring a node and a connection that are needed to be analyzed, where the node and the connection are selected by a user from the acquired network topology information; and generating, according to the node and the connection that are needed to be analyzed, a list of analysis objects.

Apart from that various manners may be adopted to determine the node and the connection that are needed to be analyzed, various manners may also be adopted to determine the network failure analysis hierarchy of the node that is needed to be analyzed, for example:
adding an indexed property, which indicates an analysis hierarchy, to each node that is needed to be analyzed in the list of analysis objects; or
acquiring a default analysis hierarchy list, that is, a preset analysis hierarchy list, of each node that is needed to be analyzed; acquiring an analysis hierarchy that is needed to be analyzed, where the analysis hierarchy is selected by a user from the analysis hierarchy list; and then adding the selected analysis hierarchy that is needed to be analyzed to an indexed property of a node corresponding to the analysis hierarchy that is needed to be analyzed in the list of analysis objects, where the default analysis hierarchy list may be preset according to an actual situation.

Step 103: Acquire a network failure mode of the analysis object determined in step 102.

Specifically, the network failure mode of the analysis object may be acquired by querying a network failure mode library, where the network failure mode library is an important knowledge base and experience base, and is a database. The network failure mode library may specifically include information such as a failure hierarchy, a product and a failure mode, and may also include a first-level failure object and/or a second-level failure object, detailed description of a failure and a failure simulation method. The content in the network failure mode library is accumulated step by step, which may be and needs to be continuously updated and improved, and strives to become a complete collection including all product failure situations so as to ensure an overall analysis.

Step 104: Analyze hierarchically, according to the network failure mode acquired in step 103, reliability of the analysis object to obtain a reliability evaluation result.

For example, reliability of an end-to-end (E2E, End to End) service, probability of each failure in each layer, and an improving mechanism of a failure mode in each layer may be analyzed according to the network failure mode; a network reliability status under a situation when each failure mode occurs in the network is obtained according to an analysis situation; and a tested item is focused on with respect to an improvement measure and suggestion required to be performed for each failure mode.

The reliability evaluation result may be used in a design stage to output a design improvement suggestion, and may also be used in a testing stage to output a testing solution, or used in a use-case suggestion such as implementing a use-case acquiring result and then outputting an overall evaluation report.

As shown in FIG 1, the method in another embodiment may further include:
Step 105: Output the reliability evaluation result obtained in step 104, and at this time, a network reliability evaluation is completed.

The reliability evaluation result may be used in a design stage to output a design improvement suggestion, and may also be used in a testing stage to output a testing solution, or used in a use-case suggestion such as implementing a use-case acquiring result and then outputting an overall evaluation report.

The solution described above not only can be used in a design analysis, but also can be used in a testing analysis, a testing use-case design and so on. Additionally, it should be noted that, the network reliability in the embodiment of the present invention is a capacity to ensure that a service may be repeatedly implemented successfully based on a communication network.

In view of the above, this embodiment determines, according to acquired network topology information, an analysis object; acquires network failure modes of the analysis object; and analyzes and evaluates reliability of the analysis object in a hierarchical and overall way with respect to the failure modes. This solution may effectively instruct activities such as network reliability design, verification and evaluation. As the concept of a hierarchical analysis is introduced into the analysis, analysis properties of analysis objects (for example, a node and a connection) are divided according to hierarchies, so that a network is effectively decomposed, an overall decomposing analysis is ensured, and the difficulty of the analysis is reduced. In addition, after an analyzing process is fixed to a tool, labor input is greatly reduced and dependency on experience of an analyst is lowered, thereby making up for the shortness of an existing analyzing method.

### Embodiment 2

The following further exemplifies the method described in Embodiment 1.

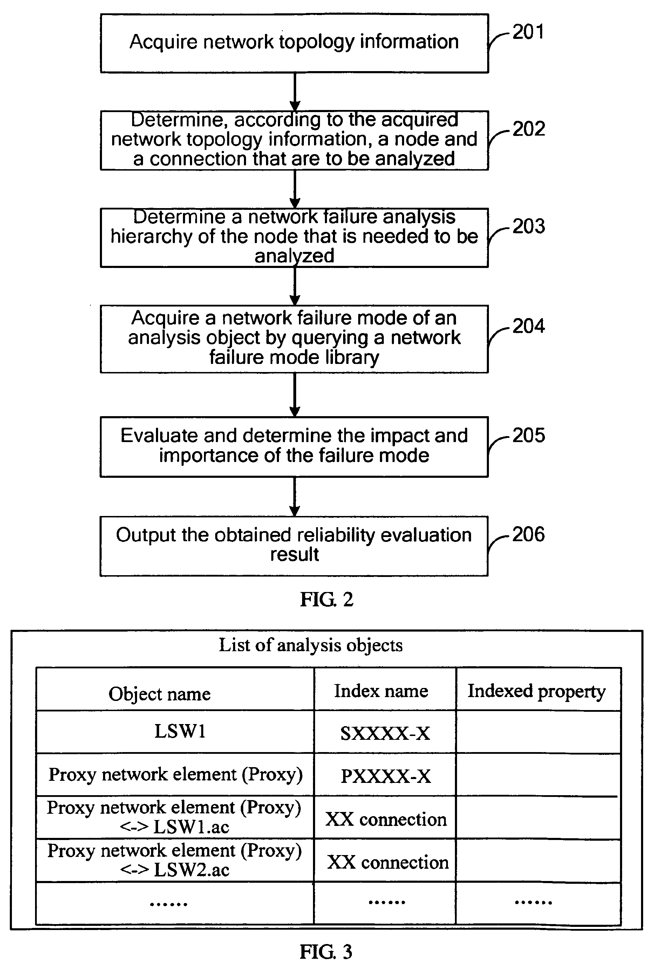

As shown in FIG 2, a specific process is described in the following.

Step 201: A device for evaluating network reliability acquires network topology information, where the network topology information includes: a network element (a network element may be used as a node in a network), a product name or product number corresponding to the network element, a connection relation, a connection name and a connection type. The manner of acquiring the network topology information may include, but not limit to, the following method:
importing an existing networking diagram, or drawing a networking diagram through man-machine interaction, that is, receiving a networking diagram input by a user in a way of drawing.

Step 202: The device for evaluating network reliability determines, according to the acquired network topology information, a node and a connection that are to be analyzed. For example, the following manners may be adopted.
(1) The device for evaluating network reliability automatically generates, according to the acquired network topology information, a list of analysis objects, where the list of analysis objects includes all nodes and connections in the network; and sets all the nodes and connections as the nodes and connections that are needed to be analyzed.

The list of analysis objects may be specifically referred to FIG 3, and the content may be as follows:
An object name: a network element name or a connection name in a corresponding networking diagram. For a network element, a display name of the network element in the networking diagram, such as, a LanSwitch1 (LSW1, LanSwitch1), an LSW2 or a proxy network element (Proxy), may be directly used. For a connection, a network element that connects two ends and a displayed connection name may be used for co-determination. For example, in this embodiment, "<->" is adopted to connect a network element that connects two ends, and a specific connection name is added behind ".", for example, "Proxy <-> LSW1.ac", or "Proxy <-> LSW2.ac".

An index name: used to perform a failure mode index in a network failure mode library, such as an SXXXX-X, a PXXXX-X or an XX connection. In actual networking, most network elements actually use a same product. For example, in the networking, ten routers are of a certain same type; therefore, in a subsequent analysis, the same property analysis may be performed on these network elements, such as, the ten routers of a same type. In this case, these network elements should have a same index name which may specifically be "a product name or a product number corresponding to a network element". Similarly, different connections in a networking diagram may also have a same index name.

Indexed property: an additional filtering condition for querying a network failure mode library. For a network element, when topology information is obtained from a networking diagram, it is regarded by default that no additional condition exists, that is, an indexed property is reserved as a blank field and can be added when an analysis hierarchy is determined subsequently, for example, a "physical layer", a "link layer" or an "application layer" is written in. For a connection, a connection type may be acquired from a networking diagram, where the connection type may include an interface type and a connection line type; for example, the interface type may be an electrical interface, an optical interface or a serial interface; and the connection line type may include a twisted pair, an optical fiber or an E1 line. Definitely, for a connection, it is also possible that no additional condition exists, for example, when no associated information can be obtained from a networking diagram, an indexed property related to the connection may also be a blank field.

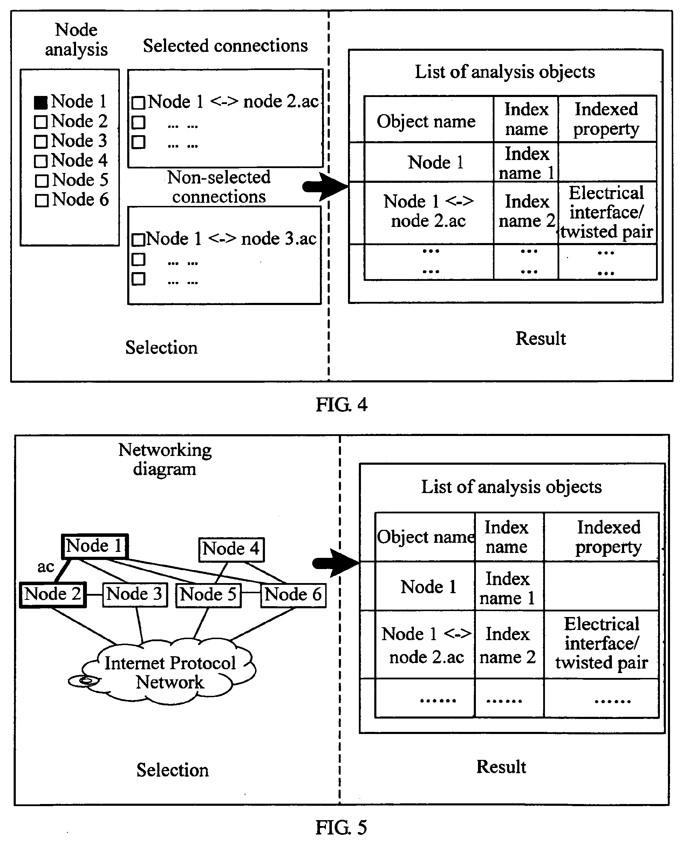

It should be noted that, lists of analysis objects in the embodiments of the present invention all cite this format as an example for illustration, that is, the content in the lists of analysis objects in FIG 4, FIG 5, FIG 6 and FIG 7 may all use this format for illustration.
(2) The device for evaluating network reliability lists, according to the acquired network topology information, all nodes and connections in a network to facilitate the selection for a user; and after a node and a connection that are needed to be analyzed are acquired, generates a list of analysis objects according to the acquired node and connection that are needed to be analyzed, where the node and the connection are selected by the user from the listed nodes and connections. For example, reference can be made to FIG 4.

The device for evaluating network reliability lists all nodes and connections, such as, node 1, node 2, node 3, node 4, node 5, and connection 6, after networking topology information of the network is acquired, where these nodes may be a proxy network element (Proxy), a server (SERVER) or a LanSwitch (LSW, LanSwitch).

Through a man-machine interaction process with a mouse or a keyboard, the device for evaluating network reliability acquires information of the node and the connection that are needed to be analyzed. For example, it is assumed that the user selects the node 1 and selects a connection between the node 1 and the node 2, that is, "node 1 <-> node 2.ac". At this time, the device for evaluating network reliability may display the node and the connection that are selected by the user, for example, display the "node 1 <-> node 2.ac" in a "selected connections" list in a way of listing. Definitely, in order to further facilitate the selection and understanding for the user, a node and a connection that are not selected by the user may also be displayed. For example, the "node 1 <-> node 3.ac" which is not selected by the user is displayed in a "non-selected connections" list. For details, reference may be made to FIG 4.

After the user selects the node and the connection that are needed to be analyzed, the device for evaluating network reliability may generate, according to the acquired information of the node and the connection that are needed to be analyzed, the list of analysis objects. For example, a name of the selected node and/or a name of the selected connection are written in an object name. For example, referring to FIG 4, "node 1" and "node 1 <-> node 2.ac" is written in the field of "object name"; and a corresponding index name in the field of "index name", such as, an index name 1 and an index name 2, is written. Definitely, each node and connection may both have a corresponding index name, which may be preset according to an actual implementation situation. Additionally, if a "connection" has a corresponding indexed property, the indexed property may also be written in at this time; for example, "electrical interface/twisted pair" is written in the field of "indexed property" corresponding to the "node 1 <-> node 2.ac".

For the content (that is, an object name, an index name and an indexed property) of the list of analysis objects in FIG 4, reference may be made to the description of the list of analysis objects in the first manner, which will not be described in detail here.
(3) The device for evaluating network reliability acquires the node and the connection that are needed to be analyzed, where the node and the connection are selected by the user from the acquired network topology information; and generates a list of analysis objects according to the node and the connection that are needed to be analyzed. For example, reference can be made to FIG. 5.

The device for evaluating network reliability directly selects a node and a connection, which are needed to be analyzed, in the networking diagram through a man-machine interaction function, such as, through a mouse or a keyboard, after the network topology information is acquired, for example, after a networking diagram is acquired; then acquires information corresponding to the node or connection according to the node or connection that is needed to be analyzed, where the node or connection is selected by the user; and generates, according to the acquired information of the node or connection, the list of analysis objects.

For example, the user selects, from the networking diagram, the node 1 and the connection "node 1 <-> node 2.ac" (bold lines in the diagram represent the selected node and connection). In this case, the device for evaluating network reliability writes the "node 1" and the "node 1 <-> node 2.ac" in the field of "object name" in the list of analysis objects; and writes a corresponding index name, such as, an index name 1 and an index name 2, in the field of "index name". In addition, if the "connection" has a corresponding indexed property, the indexed property may also be written in at this time; for example, "electrical interface/twisted pair" is written in the field of "indexed property" corresponding to the "node 1 <-> node 2.ac".

For the content (that is, an object name, an index name and an indexed property) of the list of analysis objects in FIG 5, reference may be made to the previous embodiments, which will not be described in detail here.

Step 203: The device for evaluating network reliability determines a network failure analysis hierarchy of the node that is needed to be analyzed.

In the process, according to a hierarchy division standard of open system interconnect (OSI, Open System Interconnect), a network may be divided, according to logic functions, into seven layers: a physical layer, a link layer, a network layer, a transmission layer, a session layer, a presentation layer and an application layer. In a general application, functions of layers five to six (that is, the session layer and the presentation layer) is seldom individually focused on, so that in the embodiment of the present invention, the layers five to seven (that is, the session layer, the presentation layer and the application layer) are combined into an application layer, that is, the network is divided into a physical layer, a link layer, a network layer, a transmission layer and an application layer for research. For a connection itself, the function of the physical layer of the connection is mainly focused on, and the research of the hierarchy may not be performed, that is, the analysis hierarchy here mainly aims at a node.

That is to say, a network failure analysis hierarchy of the node that is needed to be analyzed is determined mainly according to a network hierarchy (that is, the above-mentioned physical layer, link layer, network layer, transmission layer and application layer) which is included in a service or a function of the node that is needed to be analyzed.

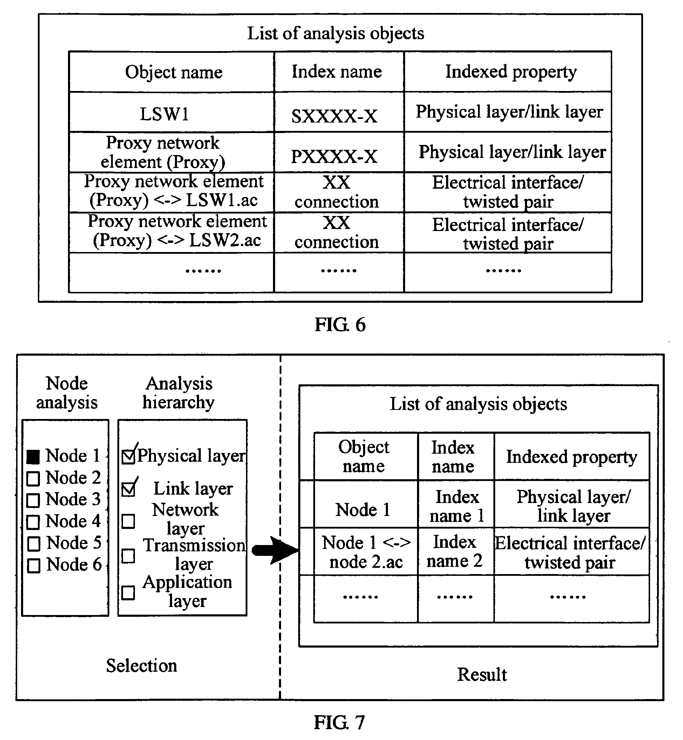

Referring to FIG 6 and FIG 7, the determining the network failure analysis hierarchy of the node that is needed to be analyzed may be implemented by adding an indexed property (that is, an analysis hierarchy) to each node in the list of analysis objects. For example, the following manners may be adopted for implementation.
(1) The device for evaluating network reliability may add an indexed property, which indicates an analysis hierarchy, to each node that is needed to be analyzed in the list of analysis objects. For example, a system provides an analysis hierarchy function, and the analysis hierarchy of each node is selected by default, and reference may be made to FIG 6.

For the content (that is, an object name, an index name and an indexed property) of the list of analysis objects in FIG 6, reference may be made to the previous embodiments, which will not be described in detail here.
(2) A default analysis hierarchy list of each node that is needed to be analyzed (the default analysis hierarchy list may be preset according to an actual situation) may be acquired for the user to perform selection; and after an analysis hierarchy that is needed to be analyzed is acquired, the selected analysis hierarchy that is needed to be analyzed is added to an indexed property of a node corresponding to the analysis hierarchy that is needed to be analyzed in the list of analysis objects, where the analysis hierarchy is selected by the user from the default analysis hierarchy list. For example, a system provides an analysis hierarchy selection function, the analysis hierarchy of each node is selected by default, then the analysis hierarchy may be determined through the man-machine interaction, and finally a list of analysis objects in which the "indexed property" of each node has the analysis hierarchy is obtained. Referring to FIG 7, for example, a "node 1" is selected by the user; at this time, the system displays an "analysis hierarchy" list, including: a physical layer, a link layer, a network layer, a transmission layer and an application layer, and the user may select, according to a requirement, a hierarchy that is needed to be analyzed. For example, only the "physical layer and link layer" are selected, and then the device for evaluating network reliability writes the "physical layer and link layer" in the field of "indexed property" of the "node 1".

For the content (that is, an object name, an index name and an indexed property) of the list of analysis objects in FIG 7, reference may be made to the previous embodiments, which will not be described in detail here.

Step 204: The device for evaluating network reliability acquires a network failure mode of an analysis object by querying a network failure mode library.

The network failure mode library is a database which records properties such as each failure mode of each product and connection which has happened or may happen under each network hierarchy, a cause of the failure, and a failure simulation method of the failure. The content in the library is accumulated step by step, which may be and needs to be continuously updated and improved, and strives to become a complete collection including all product failure situations so as to ensure an overall analysis.

One simple logic architecture of the network failure mode library may be shown in Table 1.

**Table 1**

| **Failure Hierarchy** | **Product** | **First-level Failure Object** | **Second-level Failure Object** | **Failure Mode** | **Detailed Description of the Failure** | **Failure Simulation Method** | **...** |
|---|---|---|---|---|---|---|---|
| Physical layer | PXXXX-X | Overall system | | All break | ... | ... | ... |
| Physical layer | XX connection | Optical interface | | On and off | ... | ... | ... |
| Physical layer | XX connection | Optical fiber | | Break | ... | ... | ... |
| Link laver | sxxxx-x | Internet | ... | | ... | ... | ... |
| Network layer | sxxxx-x | Unicast routing | BGP | Topology vibration | ... | ... | ... |
| Transmission layer | PXXXX-X | SCTP | | Coupling establishment failure | ... | ... | ... |
| Application layer | PXXXX-X | Link relay | ... | Link break | ... | ... | ... |
| ... | ... | ... | ... | ... | ... | ... | ... |

The BGP (Border Gateway Protocol) is a border gateway protocol, and the SCTP (Stream Control Transmission Protocol) is a stream control transmission protocol. Each item in Table 1 is briefly described in the following.
(1) Failure hierarchy: a network hierarchy where a failure occurs, that is, a five-layer analyzing structure adopted in the embodiment of the present invention, which specifically includes: a physical layer, a link layer, a network layer, a transmission layer and an application layer.
(2) Product: corresponding to the "index name" in the list of analysis objects which is described before.
(3) First-level failure object and second-level failure object: functional bodies with a failure occurring, which may be flexibly divided according to various requirements, for example, both an interface type and a connection line type of a connection are recorded to the first-level failure object.
(4) Failure mode: a presentation form to the outside after a failure occurs in the product and connection.
(5) Detailed description of a failure: including description of the cause and phenomenon of the failure.
(6) Failure simulation method: a testing simulation method for this kind of failures.

It should be noted that, only a possible structure of a network failure mode library is given herein, and in an actual application, a new field may be flexibly added and an arranging sequence of each field may be altered according to a requirement.

By querying a network failure mode library according to the list of analysis objects determined in steps 202 and 203, each network failure mode of each analysis object (a node and/or a connection) may be acquired.

For a node, a querying condition is: [product = index name] and [failure hierarchy included in indexed property]; for a connection, a querying condition is: [product = index name]; and if the indexed property is not null, it needs to perform filtering according to [first-level failure object included in indexed property]. That is, for the node, the "index name" in the list of analysis objects corresponds to the "product" in the network failure mode library, and the "indexed property" in the list of analysis objects corresponds to the "failure hierarchy" in the network failure mode library; and for the connection, the "index name" in the list of analysis objects corresponds to the "product" in the network failure mode library, and the "indexed property" in the list of analysis objects corresponds to the "first-level failure object" in the network failure mode library.

Finally, queried results (that is, results of querying the network failure mode library, taking Table 1 as an example of the network failure mode library) are arranged and listed according to the node and the connection, and an output is shown in Table 2.

**Table 2**

| **Node/connection** | **Failure Hierarchy** | **Failure Mode** | **Cause of the Failure** | **...** |
|---|---|---|---|---|
| PXXXX-X | Physical layer | All break | ... | ... |
| | Transmission layer | Coupling establishment failure | ... | ... |
| | Application layer | Link break | ... | ... |
| XX connection | Physical layer | Break | ... | ... |
| | Physical layer | On and off | ... | ... |
| ... | ... | ... | ... | ... |

Step 205: The device for evaluating network reliability analyzes and determines the impact and importance of a failure mode. Specifically, analysis and evaluation may be performed according to multiple dimensions in the above table with respect to each failure mode and cause, and finally provides a reliability analysis report. For example, the analysis and evaluation may be implemented from the following aspects:
Occurrence: possibility that the failure mode occurs;
Detection mechanism: a failure detection means and detection theory with respect to the failure mode;
Detection time: a time from when the failure occurs to when the failure is detected;
Alarm log: with respect to the failure, whether to generate an alarm or a log, and what kind of an alarm or a log to be generated;
Detective ability: possibility of being detected by a failure detection mechanism after the failure mode occurs;
Failure restoration manner: after the failure occurs, a manner for restoring through a remote console, restoring manually on the spot, or restoring automatically by a device;
Restoring duration: a time interval form when the failure occurs to when the failure is restored;
Protection action: a protection mechanism with respect to the failure at a network layer, such as, rerouting or backing up a path takeover;
Service available restoration duration: a duration for restoring a service "channel" through a protection action, that is, a restoration duration for path connectivity;
User restoration policy and user experience: a means for restoring a user service after a failure occurs, which includes: requiring to automatically re-access an initialization service; continuously performing a service without being affected; or releasing a current service;
Service restoration path: a new path after a service is restored under a situation when a failure occurs;
Traffic and performance analysis: the impact of service restoration on a new path in aspects of traffic and performance;
Service charging and bill: an analysis of a charging situation which is introduced by a service failure and restoration to find whether an abnormal charging occurs;
Service break duration: a duration for a break of a user service after the failure occurs;
The number of users being affected: the number of users who are affected after the failure occurs, that is, the affecting range of the failure;
Severity: the severity of the impact on a service after the failure occurs, which is evaluated from indexes of the break duration and the number of affected users, where the longer the break duration is and the more the number of affected users is, the higher the severity will be;
Impact on an operation support system (OSS, Operation Support System): impact on operation and maintenance after the failure occurs; whether to cause a device incapable of being operated or incapable of being maintained;
Risk level: comprehensively evaluating the risk brought by the failure mode on the normal proceeding of a service according to factors such as the possibility that a failure occurs, the detective ability, the restoration ability and the severity; and
Improvement suggestion: a suggested measure which is put forward to reduce the impact on a service with respect to the failure mode.

After completing the above analysis, the following operations may be further performed according to design and testing objectives.
A: With respect to the analysis in the design stage, the "improvement suggestion" may be analyzed and arranged by establishing an analysis table, and listed in a preferential order according to the "severity" to obtain an optimization suggestion. The analysis table includes all aspects that are to be analyzed and evaluated and are described above.
B: With respect to the testing analysis, a testing use-case may be output in an order of severity according to the analysis result, where the testing use-case comes from the field of "failure simulation method" in the network failure mode library.

After the testing use-case is implemented according to the priority of the use-case, a test result may be acquired, the number of defects in each layer is counted according to the test result, and a reliability evaluation report is obtained. A general principle for determining the priority of the use-case is: I = high, II = medial, III = low, IV = very low. It should be noted that, under limited labor forces and resources, which use-case to be preferentially implemented and tested in detail may be determined according to the priority of the testing use-case; and even no test will be performed on a testing use-case with a low or very low priority.

Step 206: Output a reliability evaluation result obtained in step 205, such as, output an optimization suggestion or a reliability evaluation report.

It should be noted that, the solution described above not only can be used in a design analysis, but also can be used in a testing analysis, a testing use-case design and so on.

In view of the above, this embodiment queries a network failure mode library according to acquired network topology information and hierarchy information to acquire each failure mode of an analysis object in each hierarchy; and performs comprehensive analysis and evaluation from dimensions, such as, the reliability of a service provided by a network, the possibility that a failure occurs, and the restoration mechanism after a failure occurs with respect to failure modes, so as to effectively instruct activities, such as, network reliability design, verification and evaluation. As the concept of a hierarchical analysis is introduced into the analysis, analysis properties of a network node and a connection are divided according to hierarchies, so that a new solution is provided for the analysis and verification of the network reliability, the network is effectively decomposed and analyzed, an overall analysis is ensured, and the difficulty of the analysis is reduced. In addition, after an analyzing process is fixed to a tool, labor input is greatly reduced and dependency on experience is lowered, thereby making up for the shortness of an existing analyzing method.

### Embodiment 3

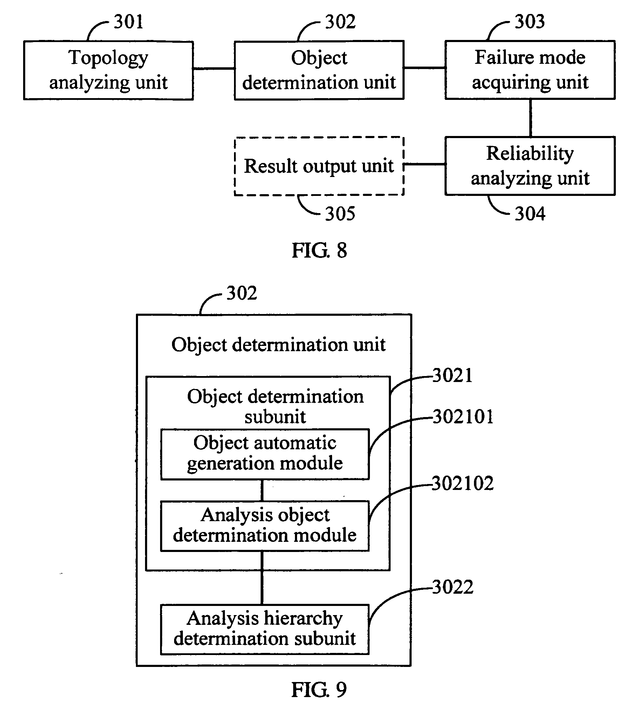

In order to better implement the above method, the embodiment of the present invention correspondingly provides a device for evaluating network reliability. As shown in FIG 8, the device for evaluating network reliability includes a topology analyzing unit 301, an object determination unit 302, a failure mode acquiring unit 303 and a reliability analyzing unit 304; and definitely may also include a result output unit 305.

The topology analyzing unit 301 is configured to acquire network topology information, where the topology information may include: a network element (or referred to as a node), a product name or product number corresponding to the network element, a connection relation, a connection name and a connection type. For example, an existing networking diagram may be acquired; or, a networking diagram input by a user in a way of drawing may be received.

The object determination unit 302 is configured to determine, according to the network topology information acquired by the topology analyzing unit 301, an analysis object.

The failure mode acquiring unit 303 is configured to acquire a network failure mode of the analysis object which is determined by the object determination unit 302.

The reliability analyzing unit 304 is configured to hierarchically analyze, according to the network failure mode acquired by the failure mode acquiring unit 303, the reliability of the analysis object to obtain a reliability evaluation result.

The result output unit 305 is configured to output the reliability evaluation result which is obtained by the reliability analyzing unit 304.

Referring to FIG. 9, FIG 10 and FIG 11, the object determination unit 302 may include an object determination subunit 3021 and an analysis hierarchy determination subunit 3022.

The object determination subunit 3021 is configured to determine, according to the network topology information acquired by the topology analyzing unit 301, a node and a connection that are needed to be analyzed.

The analysis hierarchy determination subunit 3022 is configured to determine a network failure analysis hierarchy of the node that is needed to be analyzed, where the node is determined by the object determination subunit 3021. That is to say, the network failure analysis hierarchy of the node that is needed to be analyzed is mainly determined according to a network hierarchy (that is, the above-mentioned physical layer, link layer, network layer, transmission layer and application layer) which is included in a service or a function of the node that is needed to be analyzed.

As shown in FIG 9, the object determination subunit 3021 is specifically an object automatic generation module 302101 and an analysis object determination module 302102.

The object automatic generation module 302101 is configured to generate, according to the network topology information acquired by the topology analyzing unit 301, a list of analysis objects, where the list of analysis objects includes all nodes and connections in a network.

The analysis object determination module 302102 is configured to set all the nodes and connections in the list of analysis objects as nodes and connections that are needed to be analyzed, where the list of analysis objects is generated by the object automatic generation module 302101.

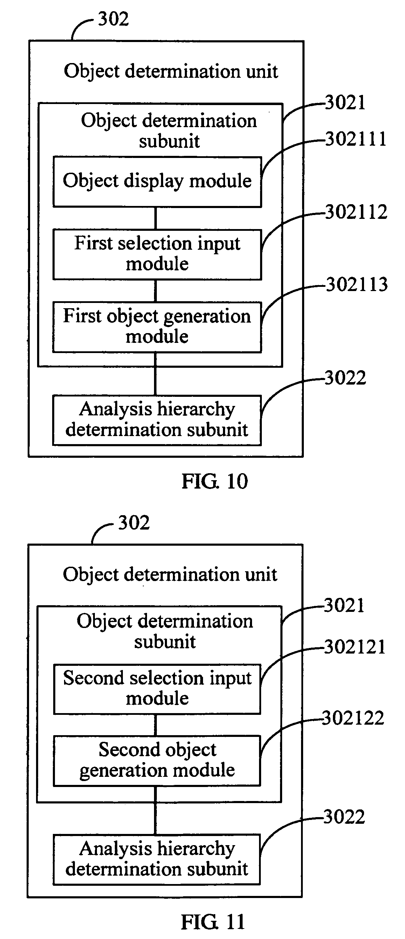

Alternatively, as shown in FIG. 10, the object determination subunit 3021 may include an object display module 302111, a first selection input module 302112 and a first object generation module 302113.

The object display module 302111 is configured to list, according to the network topology information acquired by the topology analyzing unit 301, all nodes and connections in a network.

The first selection input module 302112 is configured to acquire the node and the connection that are needed to be analyzed, where the node and the connection are selected by a user from the nodes and the connections which are listed by the object display module 302111.

The first object generation module 302113 is configured to generate, according to the node and the connection that are needed to be analyzed, where the node and the connection are acquired by the selection input module 302112, a list of analysis objects.

Alternatively, as shown in FIG 11, the object determination subunit 3021 may include a second selection input module 302121 and a second object generation module 302122.

The second selection input module 302121 is configured to acquire the node and the connection that are needed to be analyzed, where the node and the connection are selected by a user from the network topology information acquired by the topology analyzing unit 301.

The second object generation module 302122 is configured to generate, according to the node and the connection that are needed to be analyzed, a list of analysis objects, where the node and the connection are acquired by the second selection input module 302121.

The analysis hierarchy determination subunit 3022 may specifically be a first indexed property adding module or a second indexed property adding module.

The first indexed property adding module is configured to add an indexed property, which indicates an analysis hierarchy, to each node that is needed to be analyzed in the list of analysis objects.

The second indexed property adding module is configured to acquire a preset analysis hierarchy list (that is, a default analysis hierarchy list) of each node that is needed to be analyzed; acquire an analysis hierarchy that is needed to be analyzed, where the analysis hierarchy is selected by a user from the analysis hierarchy list; and then add the analysis hierarchy, which is needed to be analyzed, to an indexed property of a node corresponding to the analysis hierarchy that is needed to be analyzed in the list of analysis objects.

The failure mode acquiring unit 303 may specifically be a failure mode acquiring module.

The failure mode acquiring module is configured to acquire, by querying a network failure mode library, a network failure mode of an analysis object, where the network failure mode library may include a failure hierarchy, a product and a failure mode. Specifically, reference can be made to the previous embodiments, which will not be described in detail here.

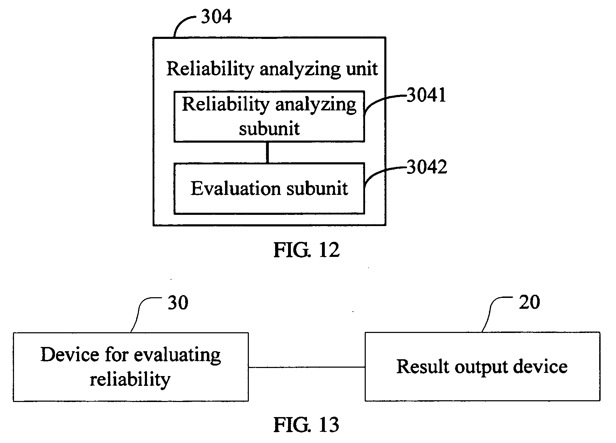

As shown in FIG 12, the reliability analyzing unit 304 may include a reliability analyzing subunit 3041 and an evaluation subunit 3042.

The reliability analyzing subunit 3041 is configured to analyze, according to the network failure mode acquired by the failure mode acquiring unit 303, reliability of an E2E service, probability of each failure in each layer, and an improving mechanism for a failure mode in each layer.

The evaluation subunit 3042 is configured to obtain, according to a situation analyzed by the reliability analyzing subunit 3041, a network reliability status under a situation when each failure mode occurs; and focus on a tested item with respect to an improvement measure and suggestion that are needed to be performed for failure modes.

Reference can be made to the previous embodiments for specific implementation of each unit, which are not described in detail here.

In view of the above, this embodiment queries a network failure mode library according to acquired network topology information and hierarchy information to acquire each failure mode of an analysis object, which is to be analyzed, in each hierarchy; and analyzes and evaluates in an overall way from dimensions of the reliability of a service provided by a network, the possibility that a failure occurs, and the restoration mechanism after a failure occurs with respect to failure modes, so as to effectively instruct activities such as network reliability design, verification and evaluation. As the concept of a hierarchical analysis is introduced into the analysis, analysis properties of a network node and a connection are divided according to hierarchies, so that a new solution is provided for the analysis and verification of the network reliability, the network is effectively decomposed and analyzed, an overall analysis is ensured, and the difficulty of the analysis is reduced. In addition, after an analyzing process is fixed to a tool, labor input is greatly reduced and dependency on experience is lowered, thereby making up for the shortness of an existing analyzing method.

### Embodiment 4

Accordingly, as shown in FIG 13, the embodiment of the present invention also provides a communication system, which includes: a device for evaluating reliability 30 provided in an embodiment of the present invention and a result output device 20.

The device for evaluating reliability 30 is configured to acquire network topology information; determine, according to the acquired network topology information, an analysis object; acquire a network failure mode of the analysis object; and hierarchically analyze, according to the network failure mode, reliability of the analysis object to obtain a reliability evaluation result.

The result output device 20 is configured to output the reliability evaluation result which is obtained by the device for evaluating reliability 30.

The device for evaluating reliability may include a topology analyzing unit 301, an object determination unit 302, a failure mode acquiring unit 303 and a reliability analyzing unit 304.

The object determination unit 302 may include an object determination subunit 3021 and an analysis hierarchy determination subunit 3022, where the object determination subunit 3021 is specifically an object automatic generation module 302101 and an analysis object determination module 302102.

Alternatively, the object determination subunit 3021 may specifically be an object display module 302111, a first selection input module 302112 and a first object generation module 302113.

Alternatively, the object determination subunit 3021 may specifically include a second selection input module 302121 and a second object generation module 302122.

The analysis hierarchy determination subunit 3022 may specifically be a first indexed property adding module or a second indexed property adding module.

The failure mode acquiring unit 303 may specifically be a failure mode acquiring module.

The reliability analyzing unit 304 may include a reliability analyzing subunit 3041 and an evaluation subunit 3042.

Reference can be made to the previous embodiments for specific implementation of each unit, which is not described in detail here.

In view of the above, this embodiment determines, according to acquired network topology information, an analysis object; acquires a network failure mode of the analysis object and analyzes and evaluates reliability of the analysis object in a hierarchical and overall way with respect to failure modes. This solution may effectively instruct activities such as network reliability design, verification and evaluation. As the concept of a hierarchical analysis is introduced into the analysis, analysis properties of analysis objects (for example, a node and a connection) are divided according to hierarchies so that the network is effectively decomposed, an overall decomposing analysis is ensured, and the difficulty of the analysis is reduced. In addition, after an analyzing process is fixed to a tool, labor input is greatly reduced and dependency on experience of an analyst is lowered, thereby making up for the shortness of an existing analyzing method.

Persons of ordinary skills in the art should understand that all or a part of the steps of the method in the embodiments of the present invention may be implemented by a program instructing relevant hardware. The program may be stored in a computer readable storage medium, such as a Read Only Memory (ROM, Read Only Memory), a Random Access Memory (RAM, Random Access Memory), a magnetic disk, or an optical disk.

The method, the device and the system for evaluating network reliability provided in the embodiments of the present invention are described in detail above. The principle and implementation of the present invention are described herein through specific examples. The description about the embodiments of the present invention is merely provided for ease of understanding of the method and core ideas of the present invention.

## Claims

1. A method for evaluating network reliability, the method comprising:
acquiring (101; 201) network topology information;
**characterized by**
determining (102; 202), according to the acquired network topology information, one or more nodes and a connection that are needed to be analyzed; and
determining (103; 203), according to a network hierarchy comprised in a service or a function of the node that is needed to be analyzed, a network failure analysis hierarchy of the node as an analysis object or a list of analysis objects ;
acquiring (104; 204) a network failure mode of the analysis object or an analysis object from the list of analysis objects; and
analyzing (105; 205) hierarchically, according to the network failure mode, reliability of the acquired analysis object to obtain a reliability evaluation result.

2. The method according to claim 1, wherein the acquiring the network topology information comprises:
acquiring an existing networking diagram; or
receiving a networking diagram input by a user in a way of drawing.

3. The method according to claim 1, wherein the determining, according to the acquired network topology information, the one or more nodes and the connection that are needed to be analyzed comprises:
generating, according to the acquired network topology information, a list of analysis objects, wherein the list of analysis objects comprises all nodes and connections in a network, and setting all the nodes and connections as nodes and connections that are needed to be analyzed.

4. The method according to claim 1, wherein the determining, according to the acquired network topology information, the one or more nodes and the connection that are needed to be analyzed comprises:
listing, according to the acquired network topology information, all nodes and connections in a network;
acquiring the node and the connection that are needed to be analyzed, wherein the node and the connection are selected by the user from the listed nodes and connections; and
generating, according to the acquired node and connection that are needed to be analyzed, the list of analysis objects.

5. The method according to claim 1, wherein the determining, according to the acquired network topology information, the one or more nodes and the connection that are needed to be analyzed comprises:
acquiring the node and the connection that are needed to be analyzed, wherein the node and the connection are selected by a user from the acquired network topology information; and
generating, according to the acquired node and connection that are needed to be analyzed, the list of analysis objects.

6. The method according to any one of claims 3 to 5, wherein the determining the network failure analysis hierarchy of the node that is needed to be analyzed comprises:
adding an indexed property, which indicates an analysis hierarchy, to each node that is needed to be analyzed in the list of analysis objects; or
acquiring a preset analysis hierarchy list of each node that is needed to be analyzed; acquiring an analysis hierarchy that is needed to be analyzed, wherein the analysis hierarchy is selected by the user from the analysis hierarchy list; and adding the analysis hierarchy, which is needed to be analyzed, to an indexed property of a node corresponding to the analysis hierarchy that is needed to be analyzed in the list of analysis objects.

7. The method according to claim 1 or 2, wherein the acquiring the network failure mode of the analysis object comprises:
acquiring the network failure mode of the analysis object by querying a network failure mode library, wherein the network failure mode library comprises a failure hierarchy, a product and a failure mode.

8. A device for evaluating network reliability, the device comprising:
a topology analyzing unit (301), configured to acquire network topology information; and
the device being **characterized by** further comprising:
an object determination subunit (3021), configured to determine, according to the network topology information acquired by the topology analyzing unit, one or more nodes and a connection that are needed to be analyzed; and
an analysis hierarchy determination subunit (3022), configured to determine, according to a network hierarchy comprised in a service or a function of the nodes that are needed to be analyzed, a network failure analysis hierarchy of the node that is needed to be analyzed as an analysis object or a list of analysis objects, wherein the node is determined by the object determination subunit (3021);
a failure mode acquiring unit (303), configured to acquire a network failure mode of the analysis object or an analysis object of the list of analysis objects which is determined by the object determination unit (3021); and
a reliability analyzing unit (304), configured to analyze hierarchically, according to the network failure mode acquired by the failure mode acquiring unit, reliability of the acquired analysis object to obtain a reliability evaluation result.

9. The device for evaluating reliability according to claim 8, wherein the object determination subunit comprises:
an object automatic generation module (302101), configured to generate, according to the network topology information acquired by the topology analyzing unit, the list of analysis objects, wherein the list of analysis objects comprises all nodes and connections in a network; and
an analysis object determination module (302102), configured to set all the nodes and connections in the list of analysis objects as nodes and connections that are needed to be analyzed, wherein the list of analysis objects is generated by the object automatic generation module.

10. The device for evaluating reliability according to claim 8, wherein the object determination subunit comprises:
an object display module (302111), configured to list, according to the network topology information acquired by the topology analyzing unit, all nodes and connections in a network;
a first selection input module (302112), configured to acquire the node and the connection that are needed to be analyzed, wherein the node and the connection are selected by a user from the nodes and connections listed by the object display module; and
a first object generation module (302113), configured to generate, according to the node and the connection that are needed to be analyzed, a list of analysis objects, wherein the node and the connection are acquired by the first selection input module.

11. The device for evaluating reliability according to claim 8, wherein the object determination subunit comprises:
a second selection input module (302121), configured to acquire the node and the connection that are needed to be analyzed, wherein the node and the connection are selected by a user from the network topology information acquired by the topology analyzing unit; and
a second object generation module (302122), configured to generate, according to the node and the connection that are needed to be analyzed, a list of analysis objects, wherein the node and the connection are acquired by the second selection input module.

12. The device for evaluating reliability according to any one of claims 9 to 11, wherein the analysis hierarchy determination subunit is specifically a first indexed property adding module or a second indexed property adding module;
the first indexed property adding module is configured to add an indexed property, which indicates an analysis hierarchy, to each node that is needed to be analyzed in the list of analysis objects; or
the second indexed property adding module is configured to acquire a preset analysis hierarchy list of each node that is needed to be analyzed; acquire an analysis hierarchy that is needed to be analyzed, wherein the analysis hierarchy is selected by a user from the analysis hierarchy list; and add the analysis hierarchy, which is needed to be analyzed, to an indexed property of a node corresponding to the analysis hierarchy that is needed to be analyzed in the list of analysis objects.

13. A system for evaluating network reliability, comprising any one of the devices for evaluating reliability in claims 8 to 12 and a result output device configured to output a reliability evaluation result obtained by the device for evaluating reliability

## Patentansprüche

1. Verfahren zum Bewerten von Netzzuverlässigkeit, wobei das Verfahren Folgendes umfasst:
Erfassen (101; 210) von Netztopologieinformationen;
**gekennzeichnet durch**
Bestimmen (102; 202), gemäß den erfassten Netztopologieinformationen, eines oder mehrerer Knoten und einer Verbindung, die analysiert werden müssen;
Bestimmen (103; 203), gemäß einer Netzhierarchie, die in einem Dienst oder einer Funktion des Knotens, der analysiert werden muss, umfasst ist, einer Netzfehleranalysehierarchie des Knotens als ein Analyseobjekt oder eine Liste von Analyseobjekten;
Erfassen (104; 204) eines Netzfehlermodus des Analyseobjekts oder eines Analyseobjekts aus der Liste von Analyseobjekten; und
Analysieren (105; 205) auf hierarchische Weise, gemäß dem Netzfehlermodus, von Zuverlässigkeit des erfassten Analyseobjekts, um ein Zuverlässigkeitsbewertungsergebnis zu erhalten.

2. Verfahren nach Anspruch 1, wobei das Erfassen der Netztopologieinformationen Folgendes umfasst:
Erfassen eines existierenden Netzdiagramms; oder
Empfangen einer Netzdiagrammeingabe von einem Benutzer mittels einer Zeichnung.

3. Verfahren nach Anspruch 1, wobei das Bestimmen, gemäß den erfassten Netztopologieinformationen, des einen oder der mehreren Knoten und der Verbindung, die analysiert werden müssen, Folgendes umfasst:
Erzeugen, gemäß den erfassten Netztopologieinformationen, einer Liste von Analyseobjekten, wobei die Liste von Analyseobjekten alle Knoten und
Verbindungen in einem Netz umfasst, und Einstellen aller Knoten und Verbindungen als Knoten und Verbindungen, die analysiert werden müssen.

4. Verfahren nach Anspruch 1, wobei das Bestimmen, gemäß den erfassten Netztopologieinformationen, des einen oder der mehreren Knoten und der Verbindung, die analysiert werden müssen, Folgendes umfasst:
Auflisten, gemäß den erfassten Netztopologieinformationen, aller Knoten und Verbindungen in einem Netz;
Erfassen des Knotens und der Verbindung, die analysiert werden müssen, wobei der Knoten und die Verbindung von einem Benutzer aus den aufgelisteten Knoten und Verbindungen ausgewählt werden; und
Erzeugen, gemäß dem erfassten Knoten und der erfassten Verbindung, die analysiert werden müssen, der Liste von Analyseobjekten.

5. Verfahren nach Anspruch 1, wobei das Bestimmen, gemäß den erfassten Netztopologieinformationen, des einen oder der mehreren Knoten und der Verbindung, die analysiert werden müssen, Folgendes umfasst:
Erfassen des Knotens und der Verbindung, die analysiert werden müssen, wobei der Knoten und die Verbindung von einem Benutzer aus den erfassten Netztopologieinformationen ausgewählt werden; und
Erzeugen, gemäß dem erfassten Knoten und der Verbindung, die analysiert werden müssen, der Liste von Analyseobjekten.

6. Verfahren nach einem der Ansprüche 3 bis 5, wobei das Bestimmen der Netzfehleranalysehierarchie des Knotens, der analysiert werden muss, Folgendes umfasst:
Hinzufügen einer indizierten Eigenschaft, die eine Analysehierarchie angibt, zu jedem Knoten, der analysiert werden muss, in der Liste von Analyseobjekten; oder
Erfassen einer voreingestellten Analysehierarchieliste von jedem Knoten, der analysiert werden muss; Erfassen einer Analysehierarchie, die analysiert werden muss, wobei die Analysehierarchie von dem Benutzer aus der Analysehierarchieliste ausgewählt wird; und Hinzufügen der Analysehierarchie, die analysiert werden muss, zu einer indizierten Eigenschaft eines Knotens, der der Analysehierarchie, die analysiert werden muss, entspricht, in der Liste von Analyseobjekten.

7. Verfahren nach einem der Ansprüche 1 oder 2, wobei das Erfassen des Netzfehlermodus des Analyseobjekts Folgendes umfasst:
Erfassen des Netzfehlermodus des Analyseobjekts durch Abfragen einer Netzfehlermodusbibliothek, wobei die Netzfehlermodusbibliothek eine Fehlerhierarchie, ein Produkt und einen Netzfehlermodus umfasst.

8. Vorrichtung zum Bewerten von Netzzuverlässigkeit, wobei die Vorrichtung Folgendes umfasst:
eine Topologieanalyseeinheit (301), die dafür ausgelegt ist, Netztopologieinformationen zu erfassen; und wobei
die Vorrichtung **dadurch gekennzeichnet ist, dass** sie Folgendes umfasst:
eine Objektbestimmungsuntereinheit (3021), die dafür ausgelegt ist, gemäß den erfassten Netztopologieinformationen, die von der Topologieanalyseeinheit erfasst werden, einen oder mehrere Knoten und eine Verbindung, die analysiert werden müssen, zu bestimmen;
eine Analysehierarchiebestimmungsuntereinheit (3022), die dafür ausgelegt ist, gemäß einer Netzhierarchie, die in einem Dienst oder einer Funktion der Knoten, die analysiert werden müssen, eine Netzfehleranalysehierarchie des Knotens, der analysiert werden muss, als ein Analyseobjekt oder eine Liste von Analyseobjekten umfasst ist, wobei der Knoten durch die Objektbestimmungsuntereinheit (3021) bestimmt wird, zu bestimmen; und
eine Fehlermoduserfassungseinheit (303), die dafür ausgelegt ist, einen Netzfehlermodus des Analyseobjekts oder eines Analyseobjekts aus der Liste von Analyseobjekten zu erfassen, wobei die Liste von Analyseobjekten von der Objektbestimmungseinheit (3021) bestimmt wird ; und
eine Zuverlässigkeitsanalyseeinheit (304), die dafür ausgelegt ist, auf hierarchische Weise, gemäß dem Netzfehlermodus, der durch die Fehlermoduserfassungseinheit erfasst wird, Zuverlässigkeit des erfassten Analyseobjekts zu analysieren, um ein Zuverlässigkeitsbewertungsergebnis zu erhalten.

9. Vorrichtung zum Bewerten von Zuverlässigkeit nach Anspruch 8, wobei die Objektbestimmungsuntereinheit Folgendes umfasst:
ein automatisches Objekterzeugungsmodul (302101), das dafür ausgelegt ist, gemäß den Netztopologieinformationen, die von der Topologieanalyseeinheit erfasst werden, die Liste von Analyseobjekten zu erzeugen, wobei die Liste von Analyseobjekten alle Knoten und Verbindungen in einem Netz umfasst, und
ein Objektbestimmungsanalysemodul (302102), das dafür ausgelegt ist, alle Knoten und Verbindungen in der Liste von Analyseobjekten als Knoten und Verbindungen, die analysiert werden müssen, einzustellen, wobei die Liste von Analyseobjekten von dem automatischen Objekterzeugungsmodul erzeugt wird.

10. Vorrichtung zum Bewerten von Zuverlässigkeit nach Anspruch 8, wobei die Objektbestimmungsuntereinheit Folgendes umfasst:
ein Objektanzeigemodul (302111), das dafür ausgelegt ist, gemäß den Netztopologieinformationen, die von der Topologieanalyseinheit erfasst werden, alle Knoten und Verbindungen in einem Netz aufzulisten;
ein erstes Eingabeauswahlmodul (302112), das dafür ausgelegt ist, den Knoten und die Verbindung, die analysiert werden müssen, zu erfassen, wobei der Knoten und die Verbindung von einem Benutzer aus den von dem Objektanzeigemodul aufgelisteten Knoten und Verbindungen ausgewählt werden; und
ein erstes Objekterzeugungsmodul (302113), das dafür ausgelegt ist, gemäß dem Knoten und der Verbindung, die analysiert werden müssen, eine Liste von Analyseobjekten zu erzeugen, wobei der Knoten und die Verbindung von dem ersten Eingabeauswahlmodul erfasst werden.

11. Vorrichtung zum Bewerten von Zuverlässigkeit nach Anspruch 8, wobei die Objektbestimmungsuntereinheit Folgendes umfasst:
ein zweites Eingabeauswahlmodul (302121), das dafür ausgelegt ist, den Knoten und die Verbindung, die analysiert werden müssen, zu erfassen, wobei der Knoten und die Verbindung von einem Benutzer aus den von der Topologieanalyseeinheit erfassten Netztopologieinformationen ausgewählt werden; und
ein zweites Objekterzeugungsmodul (302122), das dafür ausgelegt ist, gemäß dem Knoten und der Verbindung, die analysiert werden müssen, eine Liste von Analyseobjekten zu erzeugen, wobei der Knoten und die Verbindung von dem zweiten Eingabeauswahlmodul erfasst werden.

12. Vorrichtung zum Bewerten von Zuverlässigkeit nach einem der Ansprüche 9 bis 11, wobei die Analysehierarchiebestimmungsuntereinheit insbesondere ein erstes indiziertes Eigenschaftshinzufügungsmodul oder ein zweites indiziertes Eigenschaftshinzufügungsmodul ist; wobei
das erste indizierte Eigenschaftshinzufügungsmodul dafür ausgelegt ist, eine indizierte Eigenschaft, die eine Analysehierarchie angibt, zu jedem Knoten, der analysiert werden muss, in der Liste von Analyseobjekten hinzuzufügen; oder
das zweite indizierte Eigenschaftshinzufügungsmodul dafür ausgelegt ist, eine voreingestellte Analysehierarchieliste von jedem Knoten, der analysiert werden muss, zu erfassen; eine Analysehierarchie, die analysiert werden muss, zu erfassen, wobei die Analysehierarchie von einem Benutzer aus der Analysehierarchieliste ausgewählt ist; und die Analysehierarchie, die analysiert werden muss, zu einer indizierten Eigenschaft eines Knotens, der der Analysehierarchie, die analysiert werden muss, entspricht, in der Liste von Analyseobjekten hinzuzufügen.

13. System zum Bewerten von Netzzuverlässigkeit, das eine der Vorrichtungen zum Bewerten von Zuverlässigkeit nach den Ansprüchen 8 bis 12 und eine Ergebnisausgabevorrichtung, die dafür ausgelegt ist, ein Zuverlässigkeitsbewertungsergebnis, das von der Vorrichtung zum Bewerten von Zuverlässigkeit erhalten wird, auszugeben, umfasst.

## Revendications

1. Procédé d'évaluation de la fiabilité d'un réseau, le procédé comprenant :
l'acquisition (101 ; 201) d'informations de topologie de réseau ;
**caractérisé par**
la détermination (102 ; 202), conformément aux informations de topologie de réseau acquises, d'un ou plusieurs noeuds et d'une connexion qu'il est nécessaire d'analyser ;
et
la détermination (103 ; 203), conformément à une hiérarchie de réseau contenue dans un service ou une fonction du noeud qu'il est nécessaire d'analyser, d'une hiérarchie d'analyse de défauts du réseau du noeud en tant qu'objet d'analyse ou que liste d'objets d'analyse ;
l'acquisition (104 ; 204) d'un mode de défaut du réseau de l'objet d'analyse ou d'un objet d'analyse à partir de la liste d'objets d'analyse ; et
l'analyse (105 ; 205) hiérarchique, conformément au mode de défaut du réseau, de la fiabilité de l'objet d'analyse acquis afin d'obtenir un résultat d'évaluation de la fiabilité.

2. Procédé selon la revendication 1, dans lequel l'acquisition des informations de topologie de réseau comprend :
l'acquisition d'un diagramme de mise en réseau existant ; ou
la réception d'un diagramme de mise en réseau fourni en entrée par un utilisateur sous forme de dessin.

3. Procédé selon la revendication 1, dans lequel la détermination, conformément aux informations de topologie de réseau acquises, des un ou plusieurs noeuds et de la connexion qu'il est nécessaire d'analyser comprend :
la génération, conformément aux informations de topologie de réseau acquises, d'une liste d'objets d'analyse, dans lequel la liste d'objets d'analyse comprend tous les noeuds et toutes les connexions dans un réseau, et le réglage de tous les noeuds et de toutes les connexions en tant que noeuds et connexions qu'il est nécessaire d'analyser.

4. Procédé selon la revendication 1, dans lequel la détermination, conformément aux informations de topologie de réseau acquises, des un ou plusieurs noeuds et de la connexion qu'il est nécessaire d'analyser comprend :
l'établissement d'une liste, conformément aux informations de topologie de réseau acquises, de tous les noeuds et de toutes les connexions dans un réseau ;
l'acquisition du noeud et de la connexion qu'il est nécessaire d'analyser, dans lequel le noeud et la connexion sont sélectionnés par l'utilisateur parmi les noeuds et les connexions indiqués dans la liste ; et
la génération, conformément au noeud et à la connexion acquis qu'il est nécessaire d'analyser, de la liste d'objets d'analyse.

5. Procédé selon la revendication 1, dans lequel la détermination, conformément aux informations de topologie de réseau acquises, des un ou plusieurs noeuds et de la connexion qu'il est nécessaire d'analyser comprend :
l'acquisition du noeud et de la connexion qu'il est nécessaire d'analyser, dans lequel le noeud et la connexion sont sélectionnés par un utilisateur parmi les informations de topologie de réseau acquises ; et
la génération, conformément au noeud et à la connexion acquis qu'il est nécessaire d'analyser, de la liste d'objets d'analyse.

6. Procédé selon l'une quelconque des revendications 3 à 5, dans lequel la détermination de la hiérarchie d'analyse de défauts du réseau du noeud qu'il est nécessaire d'analyser comprend :
l'ajout d'une propriété indexée, qui indique une hiérarchie d'analyse, à chaque noeud qu'il est nécessaire d'analyser dans la liste d'objets d'analyse ; ou
l'acquisition d'une liste de hiérarchies d'analyse prédéfinie de chaque noeud qu'il est nécessaire d'analyser ;
l'acquisition d'une hiérarchie d'analyse qu'il est nécessaire d'analyser, dans lequel la hiérarchie d'analyse est sélectionnée par l'utilisateur à partir de la liste de hiérarchies d'analyse ; et l'ajout de la hiérarchie d'analyse qu'il est nécessaire d'analyser à une propriété indexée d'un noeud correspondant à la hiérarchie d'analyse qu'il est nécessaire d'analyser dans la liste d'objets d'analyse.

7. Procédé selon la revendication 1 ou 2, dans lequel l'acquisition du mode de défaut du réseau de l'objet d'analyse comprend :
l'acquisition du mode de défaut du réseau de l'objet d'analyse par interrogation d'une bibliothèque de modes de défaut du réseau, dans lequel la bibliothèque de modes de défaut du réseau comprend une hiérarchie de défaut, un produit et un mode de défaut.

8. Dispositif d'évaluation de la fiabilité d'un réseau, le dispositif comprenant :
une unité d'analyse de topologie (301), configurée pour acquérir des informations de topologie de réseau ; et
le dispositif étant **caractérisé en ce qu'**il comprend en outre :
une sous-unité de détermination d'objet (3021), configurée pour déterminer, conformément aux informations de topologie de réseau acquises par l'unité d'analyse de topologie, un ou plusieurs noeuds et une connexion qu'il est nécessaire d'analyser ; et
une sous-unité de détermination de hiérarchie d'analyse (3022), configurée pour déterminer, conformément à une hiérarchie de réseau contenue dans un service ou une fonction des noeuds qu'il est nécessaire d'analyser, une hiérarchie d'analyse de défauts du réseau du noeud qu'il est nécessaire d'analyser en tant qu'objet d'analyse ou que liste d'objets d'analyse, dans lequel le noeud est déterminé par la sous-unité de détermination d'objet (3021) ;
une unité d'acquisition de mode de défaut (303), configurée pour acquérir un mode de défaut du réseau de l'objet d'analyse ou d'un objet d'analyse de la liste d'objets d'analyse qui est déterminé par l'unité de détermination d'objet (3021) ; et
une unité d'analyse de fiabilité (304), configurée pour analyser hiérarchiquement, conformément au mode de défaut du réseau acquis par l'unité d'acquisition de mode de défaut, la fiabilité de l'objet d'analyse acquis afin d'obtenir un résultat d'évaluation de la fiabilité.

9. Dispositif d'évaluation de la fiabilité selon la revendication 8, dans lequel la sous-unité de détermination d'objet comprend :
un module de génération automatique d'objet (302101), configuré pour générer, conformément aux informations de topologie de réseau acquises par l'unité d'analyse de topologie, la liste d'objets d'analyse, dans lequel la liste d'objets d'analyse comprend tous les noeuds et toutes les connexions dans un réseau ; et
un module de détermination d'objet d'analyse (302102), configuré pour définir tous les noeuds et toutes les connexions dans la liste d'objets d'analyse en tant que noeuds et connexions qu'il est nécessaire d'analyser, dans lequel la liste d'objets d'analyse est générée par le module de génération automatique d'objet.

10. Dispositif d'évaluation de la fiabilité selon la revendication 8, dans lequel la sous-unité de détermination d'objet comprend :
un module d'affichage d'objets (302111), configuré pour établir une liste, conformément aux informations de topologie de réseau acquises par l'unité d'analyse de topologie, de tous les noeuds et de toutes les connexions dans un réseau ;
un premier module d'entrée de sélection (302112), configuré pour acquérir le noeud et la connexion qu'il est nécessaire d'analyser, dans lequel le noeud et la connexion sont sélectionnés par un utilisateur parmi les noeuds et les connexions dont la liste est établie par le module d'affichage d'objets ; et
un premier module de génération d'objets (302113), configuré pour générer, conformément au noeud et à la connexion qu'il est nécessaire d'analyser, une liste d'objets d'analyse, dans lequel le noeud et la connexion sont acquis par le premier module d'entrée de sélection.

11. Dispositif d'évaluation de la fiabilité selon la revendication 8, dans lequel la sous-unité de détermination d'objet comprend :
un second module d'entrée de sélection (302121), configuré pour acquérir le noeud et la connexion qu'il est nécessaire d'analyser, dans lequel le noeud et la connexion sont sélectionnés par un utilisateur parmi les informations de topologie de réseau acquises par l'unité d'analyse de topologie ; et
un second module de génération d'objets (302122), configuré pour générer, conformément au noeud et à la connexion qu'il est nécessaire d'analyser, une liste d'objets d'analyse, dans lequel le noeud et la connexion sont acquis par le second module d'entrée de sélection.

12. Dispositif d'évaluation de la fiabilité selon l'une quelconque des revendications 9 à 11, dans lequel la sous-unité de détermination de hiérarchie d'analyse est plus particulièrement un premier module d'ajout de propriété indexée ou un second module d'ajout de propriété indexée ;
le premier module d'ajout de propriété indexée est configuré pour ajouter une propriété indexée, qui indique une hiérarchie d'analyse, à chaque noeud qu'il est nécessaire d'analyser dans la liste d'objets d'analyse ; ou
le second module d'ajout de propriété indexée est configuré pour acquérir une liste de hiérarchies d'analyse prédéfinie de chaque noeud qu'il est nécessaire d'analyser ; acquérir une hiérarchie d'analyse qu'il est nécessaire d'analyser, dans lequel la hiérarchie d'analyse est sélectionnée par un utilisateur à partir de la liste de hiérarchies d'analyse ; et ajouter la hiérarchie d'analyse qu'il est nécessaire d'analyser à une propriété indexée d'un noeud correspondant à la hiérarchie d'analyse qu'il est nécessaire d'analyser dans la liste d'objets d'analyse.

13. Système d'évaluation de la fiabilité d'un réseau, comprenant l'un quelconque des dispositifs d'évaluation de la fiabilité des revendications 8 à 12 et un dispositif de sortie de résultat configuré pour fournir en sortie un résultat d'évaluation de la fiabilité obtenu par le dispositif d'évaluation de la fiabilité.
